# EUROPEAN PATENT SPECIFICATION

(11) **EP 4 364 092 B1**
(45) Date of publication and mention of the grant of the patent: **25.11.2026**
(21) Application number: 21947615.7
(22) Date of filing: 30.06.2021
(51) Int. Cl.: G06T 7/20, G06V 10/50, G06V 10/82, G06V 10/70

(54) **ADAPTIVE OBJECT DETECTION**
ADAPTIVE OBJEKTERKENNUNG
DÉTECTION D'OBJET ADAPTATIVE

(43) Date of publication of application: 08.05.2024
(73) Proprietor: Microsoft Technology Licensing, LLC, Redmond, WA 98052 (US)
(72) Inventor: JIANG, Shiqi, Beijing 100080 (CN); LI, Yuanchun, Beijing 100080 (CN); SHU, Yuanchao, Redmond, WA Washington 98052 (US); LIU, Yunxin, Beijing 100080 (CN)
(74) Representative: CMS Cameron McKenna Nabarro Olswang LLP
(86) International application number: PCT/CN2021/103872
(87) International publication number: WO 2023/272662

(56) References cited:
- EP-A1- 3 327 696
- WO-A1-2017/171658
- CN-A- 110 517 262
- US-A1- 2019 213 420
- US-A1- 2020 090 321
- US-A1- 2020 211 195
- XU RAN XU943@PURDUE EDU ET AL: "ApproxDet content and contention-aware approximate object detection for mobiles", PROCEEDINGS OF THE 2020 ACM SIGSIM CONFERENCE ON PRINCIPLES OF ADVANCED DISCRETE SIMULATION, ACMPUB27, NEW YORK, NY, USA, 16 November 2020 (2020-11-16), pages 449 - 462, XP058728588, ISBN: 978-1-4503-7592-4, DOI: 10.1145/3384419.3431159
- DAI XIAOLIANG ET AL: "ChamNet: Towards Efficient Network Design Through Platform-Aware Model Adaptation", 2019 IEEE/CVF CONFERENCE ON COMPUTER VISION AND PATTERN RECOGNITION (CVPR), IEEE, 15 June 2019 (2019-06-15), pages 11390 - 11399, XP033686458, DOI: 10.1109/CVPR.2019.01166
- CHEN KAI ET AL: "Optimizing Video Object Detection via a Scale-Time Lattice", 2018 IEEE/CVF CONFERENCE ON COMPUTER VISION AND PATTERN RECOGNITION, IEEE, 18 June 2018 (2018-06-18), pages 7814 - 7823, XP033473702, DOI: 10.1109/CVPR.2018.00815

## Description

### BACKGROUND

Object detection is a fundamental building block of video processing and analytics applications. With the development of the Artificial Intelligence technologies, Neural Networks (NNs)-based object detection models have shown excellent accuracy on object detection. Besides, high-resolution cameras have now been widely used for capturing images with a higher quality. To take advantage of the smoother and more detailed images, object detection networks have to be designed with a much large capacity (e.g., more convolutional layers, higher dimension, etc.) to work with the high-resolution inputs. However, an object detection model with a more complex structure shall result in a high latency when it is deployed on a resource limited device, such as an edge device. Therefore, it is desired to improve efficiency for object detection while maximizing accuracy, especially on a high resolution image.

"ApproxDet content and contention-aware approximate object detection for mobiles" by RAN XU ET AL, PROCEEDINGS OF THE 2020 ACM SIGSIM CONFERENCE ON PRINCIPLES OF ADVANCED DISCRETE SIMULATION, ACMPUB27, NEW YORK, NY, USA, 16 November 2020, pages 449-462, DOI: 10.1145/3384419.3431159 ISBN: 978-1-4503-7592-4 describes ApproxDet, an adaptive video object detection framework for mobile devices to meet accuracy-latency requirements in the face of changing content and resource contention scenarios. To achieve this, the Authors introduce a multi-branch object detection kernel, which incorporates a data-driven modelling approach on the performance metrics, and a latency SLA-driven scheduler to pick the best execution branch at runtime. The Authors evaluate ApproxDet on a large benchmark video dataset and compare quantitatively to AdaScale and YOLOv3. The Authors find that ApproxDet is able to adapt to a wide variety of contention and content characteristics and outshines all baselines, e.g., it achieves 52% lower latency and 11.1 % higher accuracy over YOLOv3. The Authors' software is open-sourced at https://github.com/purdue-dcsl/ApproxDet.

### SUMMARY

The invention is set out in the appended set of claims.

In accordance with implementations of the subject matter described herein, there is provided a solution for adaptive object detection. In this solution, object distribution information and performance metrics are obtained. The object distribution information indicates a size distribution of detected objects in a set of historical images captured by a camera. The performance metric indicates corresponding performance levels of a set of predetermined object detection models. At least one detection plan is further generated based on the object distribution information and the performance metrics. The at least one detection plan indicates which of the set of predetermined object detection models is to be applied to each of at least one sub-image in a target image to be captured by the camera. Additionally, the at least one detection plan is provided for object detection on the target image.

In this way, a detection plan for object detection can be adaptively generated based on a historical distribution of detected objects and the characteristics of the set of predetermined object detection models, e.g., NN based models. As such, different regions of an image can be adaptively assigned with corresponding detection models. For example, a region with a less probability of containing objects may be assigned with a less-complex object detection model. In this way, a balance between the detection latency and the detection accuracy may be improved.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

### BRIEF DESCRIPTION OF THE DRAWINGS

Fig. 1 illustrates an example environment in which various implementations of the subject matter described herein can be implemented;
Fig. 2 illustrates an example structure of a generating module in the generating device according to an implementation of the subject matter described herein;
Figs. 3A-3C illustrate an example process of updating a detection plan described herein;
Fig. 4 illustrates an example structure of a detecting device according to an implementation of the subject matter described herein;
Fig. 5 illustrates a flowchart of a process for generating a detection plan according to an implementation of the subject matter described herein
Fig. 6 illustrates a flowchart of a process for object detection according to an implementation of the subject matter described herein; and
Fig. 7 illustrates a block diagram of a computing device in which various implementations of the subject matter described herein can be implemented.

Throughout the drawings, the same or similar reference symbols refer to the same or similar elements.

### DETAILED DESCRIPTION

The subject matter described herein will now be discussed with reference to several example implementations. It is to be understood these implementations are discussed only for the purpose of enabling those skilled persons in the art to better understand and thus implement the subject matter described herein, rather than suggesting any limitations on the scope of the subject matter.

As used herein, the term "includes" and its variants are to be read as open terms that mean "includes, but is not limited to." The term "based on" is to be read as "based at least in part on." The terms "one implementation" and "an implementation" are to be read as "at least one implementation." The term "another implementation" is to be read as "at least one other implementation." The terms "first," "second," and the like may refer to different or same objects. Other definitions, either explicit or implicit, may be included below.

Object detection is now playing an important role in a plurality of video analytics applications, such as pedestrian tracking, autonomous driving, traffic monitoring and/or the like. In many video analytics scenarios, video feeds from cameras are analyzed on edge devices placed on-premise to accommodate limited network bandwidth and privacy requirements. Edge computing, however, is provisioned with limited computing resources, posing significant challenges on running object detection NNs for live video analytics.

On the other hand, more and more high-resolution cameras are being deployed for capturing images or video with a higher quality. To take advantage of the smoother and more detailed images, object detection networks have to be designed with a much large capacity (e.g., more convolutional layers, higher dimension, etc.) to work with the high-resolution inputs. However, this would result in a prohibitively high latency, especially when running on resource limited edge devices. In implementations of the subject matter described herein, there is provided a solution for adaptive object detection.

In accordance with implementations of the subject matter described herein, there is provided a solution for adaptive object detection. In this solution, object distribution information and performance metrics are obtained. The object distribution information indicates a size distribution of detected objects in a set of historical images captured by a camera. The performance metric indicates corresponding performance levels of a set of predetermined object detection models. At least one detection plan is further generated based on the object distribution information and the performance metrics. The at least one detection plan indicates which of the set of predetermined object detection models is to be applied to each of at least one sub-image in a target image to be captured by the camera. Additionally, the at least one detection plan is provided for object detection on the target image.

In this way, a detection plan for object detection can be adaptively generated based on a historical distribution of detected objects and the characteristics of the set of predetermined object detection models, e.g., NN based models. As such, different regions of an image can be assigned with corresponding detection models. For example, a region with a less probability of containing objects may be assigned with a less-complex object detection model. Therefore, a balance between the detection accuracy and detection latency can be improved.

Illustration is presented below to basic principles and several example implementations of the subject matter described herein with reference to the drawings.

### Example Environment

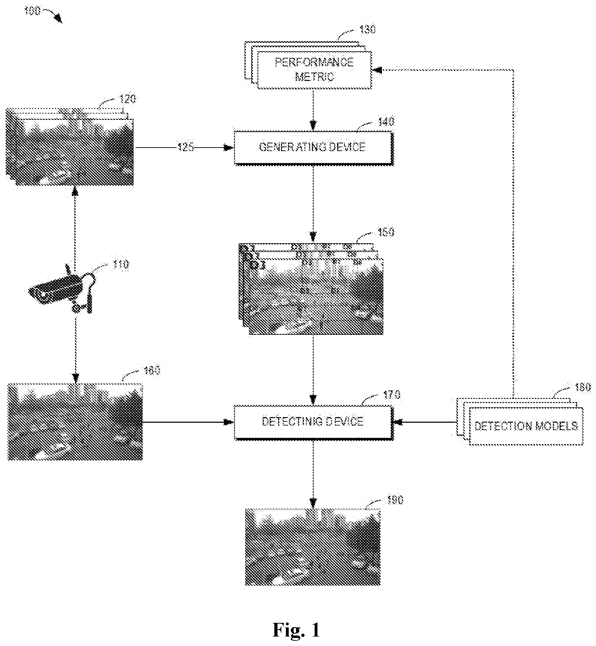

Fig. 1 illustrates a block diagram of an environment 100 in which a plurality of implementations of the subject matter described herein can be implemented. It should be understood that the environment 100 shown in Fig. 1 is only exemplary and shall not constitute any limitation on the functions and scope of the implementations described by the subject matter described herein.

As shown in Fig. 1, the environment 100 comprises a generating device 140. The generating device 140 may be configured for obtaining object distribution information 125 associated with a set of historical images 120 captured by a camera 110.

In some implementations, the object distribution information 125 may indicate a size distribution of detected objects in the set of historical images 120. For example, the object distribution information 125 may indicate a position and a size of each detected object in the set of historical images 120.

In some implementations, the object distribution information 125 may be generated based on object detection results of the set of historical images 120 by any proper computing devices. For example, the generating device 140 may receive the object detection results and generate the object distribution information 125 accordingly.

Alternatively, another computing device different from the generating device 140 may generate the object distribution information 125 and then send the information to the generating device 140 via a wire or wireless communication.

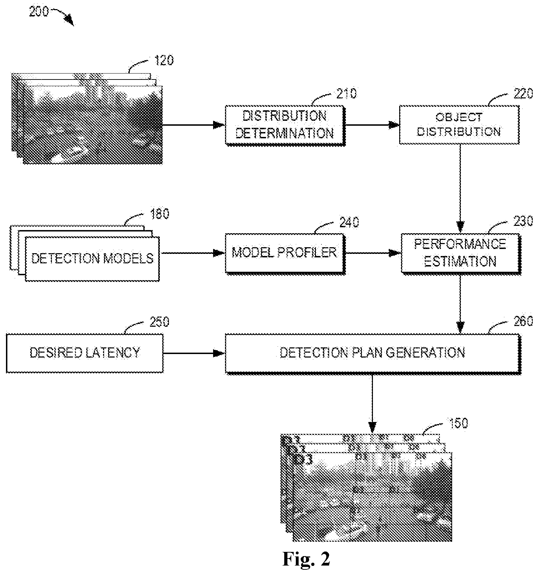

The detailed process of generating the object distribution information 125 will be described in detail with reference to Fig. 2.

Further, as shown in Fig. 1, the generating device 140 may further obtain performance metrics 130 of a set of predetermined object detection models 180. In some implementations, the performance metrics 130 may indicate a performance level of each of the set of predetermined object detection models 180. For example, the performance metric 130 may comprise a latency performance metric and/or an accuracy performance metric, as will be described in detail below.

In some implementations, the object detection models 180 may comprise any proper types of machine learning based models 180, such as neural network based object detection models (e.g., EfficentDet, RetinaNet, Faster-RCNN, YOLO, SSD-MobileNet and the like ). As used herein, the term "neural network" can handle inputs and provide corresponding outputs and it typically includes an input layer, an output layer and one or more hidden layers between the input and output layers. Individual layers of the neural network model are connected in sequence, such that an output of a preceding layer is provided as an input for a following layer, where the input layer receives the input of the neural network while the output of the output layer acts as the final output of the neural network. Each layer of the neural network includes one or more nodes (also referred to as processing nodes or neurons) and each node processes the input from the preceding layer. In the text, the terms "neural network," "model," "network" and "neural network model" may be used interchangeably.

As will be described in detail with reference to Fig. 2, the generating device 140 may generate at least one detection plan 150 based on the obtained object distribution information 125 and performance metrics 130. The at least one detection plan 150 may indicate which of the set of predetermined object detection models 180 is to be applied to each of at least one sub-image in a target image to be captured by the camera 110.

In some implementations, the at least one sub-image may be determined according to a predetermined partition mode. The partition mode may indicate how to partition an image view of the camera 110 into multiple regions. In one example, the partition plan may indicate uniformly partitioning the image view into a plurality of regions based on a predetermined region size.

In another example, the partition mode may be automatically generated based on a characteristic of an environment associated the camera 160. For example, the camera 110 may be fixedly deployed in a parking lot, and a pedestrian detection model may be utilized to detect the pedestrians in the image or video captured by the camera. Since the pedestrians are only possible to appear in some particular regions of the image view, a partition mode may be generated based on semantic analysis of elements included in the environment. For example, the partition mode may indicate partitioning the image view into different regions which have different possibilities of detecting a pedestrian respectively.

In some implementations, as will described in detail below, the partition mode may also be adaptively generated based on the object distribution information 125 and/or the performance metrics 130. Additionally, the generated partition mode may also be indicated by the generated at least one detection plan 150. For example, the at least one detection plan 150 may comprise coordinates of the vertexes of each of the regions divided from the image view according to the partition mode.

As shown in Fig. 1, the generated at least one detection plan 150 may be further provided to a detecting device 170 for object detection. The detecting device 170 may be coupled to the camera 110 to receive a target image 160 captured by the camera 110 for object detection.

In some implementations, if the received at least one detection plan 150 comprises multiple detection plans, the detecting device 170 may first select a target detection plan from the received multiple detection plans 150. For example, the detecting device 170 may select the target detection plan based on a desired latency for object detection on the target image 160.

With the target detection plan determined, the detecting device 170 may partition the target image 160 into at least one sub-image according to a partition mode. As discussed, in some implementations, the partition mode may be predetermined. Alternatively, the partition mode may also be indicated by the received at least one detection plan 150.

Further, the detecting device 170 may select one or more object detection models as indicated by the selected target detection plan. In some implementations, the set of object detection models 180 may have been already deployed on the detecting device 170, and the detecting device 170 may identify the one or more object detection models to be utilized from the set of pre-deployed object detection models 180.

In some further implementations, the detecting device 170 may also deploy only the one or more object detection models as indicated by the target detection plan. For example, the full set of predetermined object detection models may comprise ten models, and the target detection plan may indicate that only two models among the ten models are to be utilized for object detection on the target image 160. In this case, the detecting device 170 may be deployed with only the two object detection models as indicated by the target detection plan.

As shown in Fig. 1, the detecting device 170 may utilize the object detection models to detect objects in corresponding sub-image(s) generated according to the partition mode, and further determine the objects in the target image 160 based on the detected objects in the sub-image(s) for obtaining the final object detection results 190.

In some implementations, the camera 110 may comprise a high resolution camera for capturing high resolution images/videos. Further, for obtaining a stable object distribution, the camera 110 may be stationary in a fixed angle and position within a predetermined time period.

In some implementations, the generating device 140 and the detecting device 170 may be implemented in separate computing devices. The generating device 140 may for example comprise a computing device with a higher computing capability, and the detecting device 170 may for example comprise a computing device with a lower calculation capability. For example, the generating device 140 may comprise a cloud-based server, and the detecting device 170 may comprise an edge device.

It shall be understood that, though the generating device 140 and the detecting device 170 are shown as separate entities in Fig. 1, they may also be implemented in a single computing device. For example, both the generating device 140 and the detecting device 170 may be implemented in an edge computing device.

### Detection Plan Generation

Reference is first made to Fig. 2, which illustrates an example structure of a generating module 200 in the generating device according to an implementation of the subject matter described herein. For purpose of illustration, a generating module in the generating device 140 of Fig. 1 is referred as an example for implementing detection plan generation described herein. The generating module 200 comprises a plurality of modules for implementing a plurality of stages in generating at least one detection plan 150.

As shown, the generating module 200 may comprise a distribution determination module 210. In common object detection applications, the camera 110 is usually stationary in the fixed angle and position. Therefore, for one category of objects, their visible sizes are often similar over time when they are on close positions of the captured view. Further, common objects, e.g., pedestrians and vehicles, trend to appear in certain regions of the captured view.

The distribution determination module 210 may for example obtain the object detection results of the set of historical images 120, and learn the distribution of the object sizes. Given the captured view *V* from the camera 110, the distribution determination module 210 may generate the objection distribution information 220 (i.e., the distribution information 125in Fig.1) as a distribution vector *F_{V}*: ${F}_{V} = \left〈{ϕ}_{S 0},{ϕ}_{S 1},⋯{ϕ}_{M 0},{ϕ}_{M 1},⋯{ϕ}_{L 2},{ϕ}_{L 3}\right〉$ (1) where *ϕ* is the distribution probability of detected objects on each size level described in Table 1, which illustrates 12 fine-grained levels from small to large.

**Table 1 Different object-size levels and their area in Pixel**

| Level | **Small** | | | | **Medium** | | | | **Large** | | | |
|---|---|---|---|---|---|---|---|---|---|---|---|---|
| FG-Level | S0 | S1 | S2 | S3 | M0 | M1 | M2 | M3 | L0 | L1 | L2 | L3 |
| Min Area | 0 | 8 | 16 | 24 | 32 | 48 | 64 | 80 | 96 | 128 | 160 | 196 |
| Max Area | 8 | 16 | 24 | 32 | 48 | 64 | 80 | 96 | 128 | 160 | 196 | ∞ |

In some implementations, *F_{V}* may be obtained from the ground truth of the set of historical images 120. Alternatively, the distribution determination module 210 may also apply a labeling model (e.g., an oracle model) to do the labeling.

Further, as shown in Fig. 2, the generating module 200 may comprise a model profiler 240. The model profiler 240 may be configured for generating the performance metrics 130 of the set of predetermined object detection models 180.

In some implementations, the model profiler 240 may profile the latency-accuracy trade-off on different sizes of objects of the set of predetermined object detection models 180. In particular, the model profiler 240 may determine a latency metric of a particular object detection model through executing the particular object detection model on the detecting device 170 multiple time using different batch sizes. The latency metric of the particular object detection model may indicate an estimated latency for processing a batch of images by the particular object detection model.

In some implementations, for each object detection model *n* ∈ *N,* the model profiler 240 may obtain its averaged latency ${L}_{n}^{b}$, where b is the batch size and *N* refers to the set of predetermined object detection models 180.

Further, the model profiler 240 may determine an accuracy metric of a particular object detection model based on applying the particular object detection model to detect objects with different size levels. The accuracy metric may indicate an estimated accuracy for detecting objects on a particular size level by the particular object detection model.

In some implementations, the profiling process of the model profiler 240 may evaluate the set of predetermined object detection models 180 on objects with different size levels as defined in Table 1. For each detection model *n* ∈ *N,* the model profiler 240 determine a capability vector *APₙ*: ${AP}_{n} = \left〈{τ}_{S 0},{τ}_{S 1},⋯{τ}_{M 0},{τ}_{M 1},⋯{τ}_{L 2},{τ}_{L 3}\right〉$ (2) where *τ* is the detection accuracy at a particular object size level.

As shown in Fig. 2, the generating module 200 may further comprise a performance estimation module 230. The performance estimation module 230 may be configured for generating a plurality of candidate detection plans based on the distribution information 125 and the performance metrics 130.

In some implementations, the performance estimation module 230 may first generate a plurality of potential partition modes, which may indicate how to partition an image view of the camera into at least one region. Further, the performance estimation module 230 may generate a plurality of candidate detection plans based on the plurality of partition modes by assigning an object detection model to each of the set of regions.

In some implementations, a dynamic programming based algorithm as shown below may be used to determine the plurality of potential partition modes. Intuitively, the algorithm may enumerate every possible partition mode and estimates their detection accuracy and latency. Algorithm 1 below shows the pseudo code.

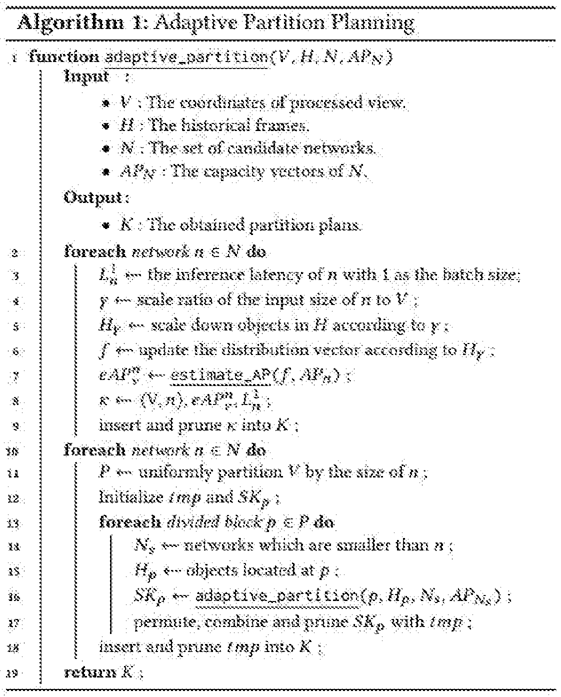

As shown in Algorithm 1, for the capture view of a camera, the algorithm takes its historical frames *H* (i.e., the set of historical images 180) and the capability vector *APₙ* of a candidate network (i.e., object detection model) *n* ∈ *N* as the inputs. The algorithm counts all the ways to process a given frame. Firstly, a frame can be downscaled and processed by an object detection model (e.g., a network) directly. Thus for each network *n* ∈ *N*, the scale ratio between the size of captured view and the required resolution of *n* is calculated (line 4).

Next, objects in *H* are scaled accordingly and the object distribution vector is updated (lines 5-6). Then estimated latency *eLat* and estimated detection accuracy *eAP* can be updated using the following Equations 3 and 4, respectively. ${eLat}_{κ} = \sum {L}_{n}^{b} , n ∈ {N}_{κ} ,$ (3) ${eAP}_{p}^{n} = {AP}_{n} ⋅ {F}_{p} .$ (4) wherein *k* denotes a partition plan (also referred to as "a detection plan" herein ) which not only indicate how to partition an image view and also which object detection model is to be applied to each region, *p* denotes a divided region (or block) of the image view *V*. The distribution vector *Fₚ* may then be determined, based on the set of historical images 120, by counting corresponding objects whose bounding boxes centroids are in the region*p*.

Further, a frame also can be split. For each network *n* ∈ *N,* the frame can be divided uniformly based on an input size of the network (lines 10-11). Every divided block in turn can be processed by this algorithm recursively (lines 13-16). The partition plans obtained from the divided blocks are notated sub-partition plans *SKₚ* (line 12). *SKₚ* of all divided blocks are permuted and combined (line 17), and their estimated latency *eLat* and estimated detection accuracy *eAP* are estimated accordingly.

In particular, for a partition plan *k,* its overall detection accuracy *eAPₖ* can be estimated by combining all the estimations of every *p* contained in *k,* ${eAP}_{κ} = \sum {eAP}_{p}^{n} ⋅ {λ}_{p} , p ∈ κ ,$ (5) where *λₚ* is the object density of *p* relative to the whole view V.

In some implementations, to decrease the search space, a prune-and-search based method may be further adopted. In particular, during the planning, if multiple partition plans in *SKₚ* have the close *eLat* within 1 ms, only the one with highest *eAP* is kept (lines 9 and 17-18). In some further implementations, a cut-off latency threshold may also be set, and any partition plan would be dropped if its *eLat* is higher than this threshold. In this way, the search space can be largely decreased.

Through Algorithm 1, the performance estimation module 230 may generate a plurality of candidate detection plans (partition plans) accordingly and provide them to the detection plan generation module 260.

Further, as shown in Fig. 2, the detection plan generation module 260 may select the at least one detection plan 150 based on estimated performances of the plurality of candidate detection plans, wherein the estimate performances are determined based on object distribution information associated with the set of regions and a performance metric associated with the assigned object detection model.

In particular, the detection plan generation module 260 may for example select the at least one detection plan 150 based on estimated latency *eLat* and estimated detection accuracy *eAP.* For example, the detection plan generation module 260 may select the at least one detection plan 150 based on a weighted sum of the estimated latency *eLat* and estimated detection accuracy *eAP.* If a value of the weighted sum is less than a predetermined threshold, the candidate detection plan may be added to the at least one detection plan 150.

In some further implementations, as shown in Fig. 2, the detection plan generation module 260 may obtain a desired latency 250 for object detection on the target image, which may indicate an upper limit of the processing time used for object detection. For example, the desired latency 250 may indicate that a processing time of object detection on the target image 160 shall not be greater than 10 seconds.

Further, the detection plan generation module 260 may select the at least one detection plan 150 from the plurality of candidate detection plans based on a comparison of an estimated latency of a candidate detection plan and the desired latency 250. For example, the detection plan generation module 260 may select the detection plans with *eLat* ranged from *T* to 1.5*T*, wherein *T* is the desired latency. In some implementations, the difference between the estimated latency of the at least one detection plan 150 and the desired latency 250 may be less than a threshold difference.

Further, partitioning higher-solution inputs may cut apart the objects around the partition boundary, leading to detection failures. In some implementations, the detection plan generation module 260 may further update the at least one detection plan 150. For example, for a first detection plan indicating that the image view is partitioned into a plurality of regions, the detection plan generation module 260 may further update the first detection plan by adjusting sizes of the plurality of regions such that each pair of neighboring regions among the plurality of regions are partially overlapped.

In some further implementations, to minimize the overhead, minimal margins may be adaptively to each divided regions. The minimal vertical and horizontal margin size can be determined by the potential object's height and width, which happens to locate at the boundary of this region. Based on the perspective effect, for one category of objects, its visible height and width in pixel is linearly related to its position on vertical axis. Therefore a linear regression may be utilized to predict an object's height and width using its position. In some implementations, the detection plan generation module 260 may leverage the historical detection results to obtain such linear relationships.

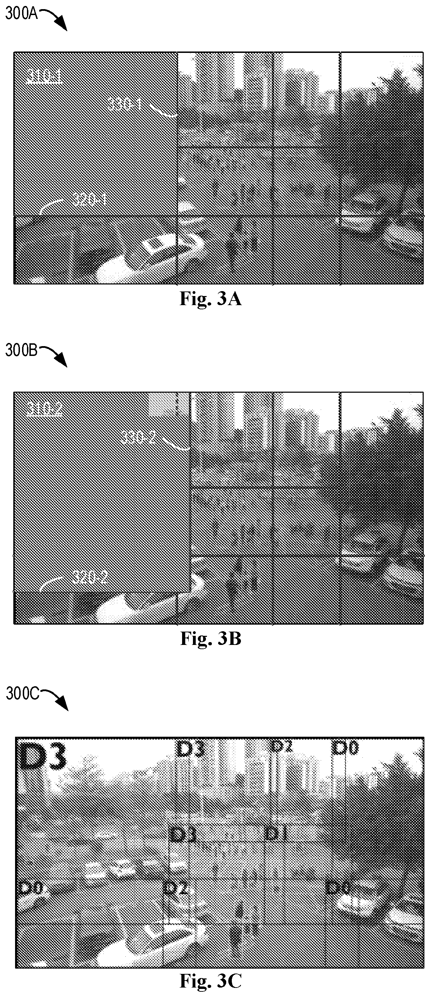

Figs. 3A-3C further illustrate an example process of updating a detection plan described herein. Fig. 3A illustrates a schematic diagram 300A of an original detection plan. As shown in Fig. 3A, there are no overlaps between any neighboring regions, which may result in that an object is divided into multiple regions.

As shown in Fig. 3B, the detection plan generation module 260 may further update sizes of the divided regions. For example, as to the region 310-1, the plan generation module 260 may extend a boundary of the first region by a distance. As discussed, the vertical and horizontal margin size can be determined by a height and a width of a potential object locating at the boundaries 320-1 and 330-1 of this region 310-1.

As shown in Fig. 3B, the horizontal boundary 320-1 in Fig. 3A is extended to the horizontal boundary 320-2 by a first distance. The first distance may be determined based on a width of a potential object which locates at the boundary 330-1. Further, the vertical boundary 330-1 in Fig. 3A is extended to the vertical boundary 330-2 by a second distance. The second distance may be determined based on a height of a potential object which locates at the boundary 320-1.

By adding the minimal necessary margin to each divided region, the detection plan generation module 260 may generate the final detection plan as illustrated in Fig. 3C. In this way, it may be ensured that an object can always be completely covered in a single region.

In some implementations, the object distribution may be updated and the detection plan may be regenerated after a period of time. In particular, the generation module may obtain updated object distribution information associated with a new set of historical images captured by a camera, and generate at least one updated detection plan based on the updated object distribution information. Further, the generation module may provide the at least one updated detection plan for object detection on image to be captured by the camera

For example, in the case of object detection in a shopping mall, an update and regeneration process can be scheduled each night using the historical image captured in the daytime. The updated object detection plan may be further used for object detection in the next daytime.

According to the process as discussed with reference to Fig. 2, a detection plan for object detection can be adaptively generated based on a historical distribution of objects and the characteristics of the set of predetermined object detection models, e.g., NN based models. As such, different regions of an image can be assigned with corresponding detection models. Therefore, a balance between the detection accuracy and detection latency can be improved.

### Adaptive Object Detection

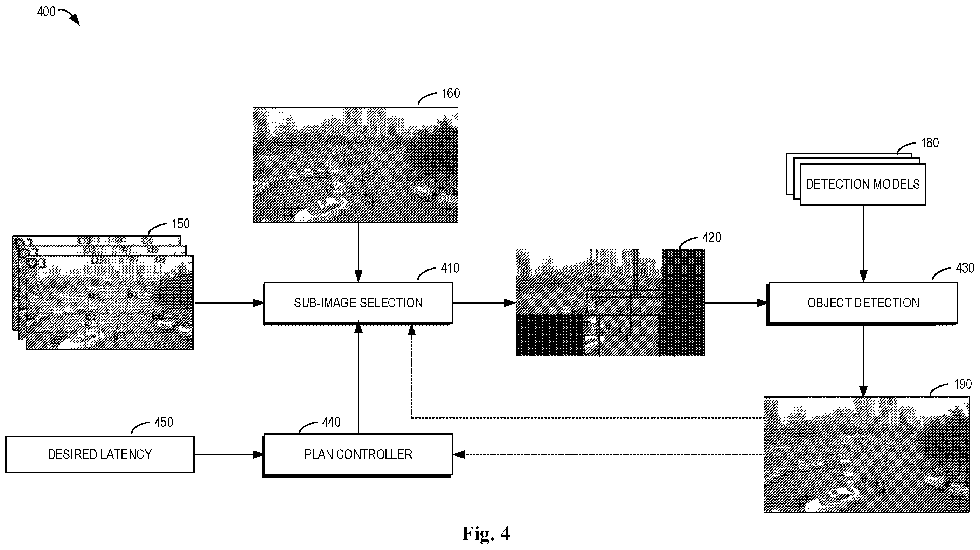

Reference is further made to Fig. 4, which illustrates an example structure of a detecting module 400 in the detecting device 170 according to an implementation of the subject matter described herein. For purpose of illustration, a detecting module in the detecting device 170 of Fig. 1 is referred as an example for implementing object detection described herein. The detecting module 400 comprises a plurality of modules for implementing a plurality of stages in object detection.

As shown in Fig. 4, the detecting module 400 may comprise a sub-image selection module 410. The sub-image selection module 410 may partition a target image 160 captured by the camera 110 into at least one sub-image according to a partition mode. As discussed above with reference to Fig. 2, in some implementations, the partition mode may comprise a predetermined partition mode. For example, the partition mode may indicate uniformly partitioning the image view into a plurality of regions based on a predetermined region size. In some further implementations, the partition mode may also be indicated by the received at least one detection plan 150.

In some implementations, if the received at least one detection plan 150 comprises a plurality of detection plans, the sub-image selection module 410 may first determine a target detection plan from the plurality of detection plans. In some implementations, the sub-image selection module 410 may select the target detection plan from the plurality of detection plans based on a desired latency for object detection on the target image 160. For example, a detection plan with the highest *eAPₖ* while its *eLatₖ* is within the desired latency is selected as the target detection plan. In some implementations, an estimated latency of the selected target detection plan may be not greater than the desired latency and a difference between the estimated latency and the desired latency may be less than a predetermined threshold.

With the target detection plan determined, the sub-image selection module 410 may partition the target image 160 into at least one sub-images according to the partition mode as indicated by the target detection plan.

Further, the object detection module 430 may utilize the corresponding object detection models as indicated by the target detection plan to perform the object detection in each of the at least one sub-image. In some implementations, if multiple sub-images are assigned to a same object detection model, those sub-images may be analyzed by the object detection model in a batch, thereby speeding up the inference.

Further, if the target image 160 is partitioned into multiple sub-images, the object detection module 430 may further merge the object detection results of the multiple sub-images for obtaining the final object detection results 190 of the target image 160. It shall be understood that any proper merging methods (e.g., non-maximum suppression (NMS) algorithm) may be applied, and the disclosure is not aimed to be limited in this regard.

Further, at runtime, some sub-images may not contain any target object. For example, they may be covered by irrelevant background or objects may just disappear in them temporarily. In some implementations, the object detection of the sub-images may also be adaptively performed. In particular, some of the sub-images may be skipped for saving compute resources.

In some implementations, the sub-image selection module 410 may first determine, based on object detection results of a plurality of historical images processed according to the target detection plan, a first set of sub-images from the plurality of sub-images to be skipped. In some implementations, the first set of sub-images may comprise a first sub-image corresponding to a first region, wherein no object is detected from sub-images corresponding to the first region of the plurality of historical images. In this way, a region which is determined as containing no object based on the historical images will be skipped.

In some further implementations, the first set of sub-images may comprise a second sub-image corresponding to a second region, wherein object detection on a sub-image corresponding to the second region of a previous historical image is skipped.

In some further implementations, the second sub-image corresponding to the second region shall be added to first set of sub-images if object detection on sub-images corresponding to the second region is skipped for a plurality of consecutive historical images and a number of the plurality of consecutive historical images is less than a threshold number.

In some implementations, the sub-image selection module 410 may leverage the previous detection results as the feedback, and deploy an Exploration-and-Exploitation strategy. In order to balance between exploiting and exploring, the sub-image selection module 410 may make the determination according to the rules below:

1) If no objects can be detected in a region for a first number of inferences (i.e., a process for object detection), the sub-image corresponding to the region shall be skipped in following second number of frames, to save the latency.

2) If objects are detected in a sub-image corresponding to a region in a first image, then a sub-image correspond to this region shall be processed in a following second image, e.g., a next frame, to ensure the detection accuracy.

3) Considering that objects may still appear sometimes in skipped regions, if a block has been skipped for a third number of past inferences, then a sub-image corresponding to the region shall not be skipped.

In some further implementations, a neat yet efficient additive-increase multiplicative-decrease (AIMD) solution may also be introduced. In particular, for each divided block (or region) *p*, a penalty window *wₚ* is assigned. The value of *wₚ* represents that the block *p* would be skipped for the following certain inferences. Initially *wₚ* is set as 0, hence every block would be executed. Once the inference is finished, *wₚ* is updated by the detection results according to the rules below:
1) If no object is detected in *p, wₚ* is linearly increased according to *wₚ = lₚ -*1, wherein *lₚ* is the consecutive inference times when no object is detected in *p.*
2) Once an object can be detected in *p*, instead of multiplicative decrease *wₚ*, *wₚ* is conservatively may be reset to 0 as well as *l,* to ensure *p* be processed in the next inference.
3) If the block *p* is skipped, its *wₚ* is decreased by 1 for every skipped inference. Once its *wₚ* is back to 0, the block shall be processed in the next inference, thereby bringing it another opportunity to infer if objects appear.

As shown in Fig. 4, the sub-image selection module 410 may generate the sub-image selection results 420. In the sub-image selection results 420 as shown in Fig. 4, the blocks with dark masks are to be skipped. By applying the conservative strategy above, the implementations may skip blocks with a high probability of containing no object, leading to significant latency speedup with minimal accuracy loss.

Since several divided sub-images might be skipped, the actual inference latency *L* may be lower than the desired latency *T*. It suggests that the system still has the compute power left. In some implementations, to fully utilize the compute power, the generating module 400 may further comprise a plan controller 440, which may be configured to obtain a historical latency for object detection on a historical image captured by the camera, wherein the object detection on the historical image is performed according to a first detection plan of the plurality of detection plans. Further, the plan controller 440 may select the target detection plan from the plurality of detection plans further based on a difference between the historical latency and the desired latency 450.

In some implementations, if the historical latency is less than the desired latency 450 and the difference is greater than a threshold, the plan controller 440 may select the target detection plan from the plurality of detection plans, wherein an estimated latency of the target detection plan is greater than that of the first detection plan.

In particular, the plan controller 440 may use the actual latency *L* as the feedback and continuously try different plans until its *L* approximates *T.* More specifically, a closed-loop controller may be employed. The desired setpoint (SP) of the controller is set to the desired latency *T.* The measured process variable (PV) is *L* as the feedback. Using SP and PV, the controller would output a control value *u.* In some implementations, *u* is the updated budget used to search plans from received at least one detection plan 150. The most accurate plan within *u* would be selected. It shall be under stood that any proper closed-loop controller (such as a proportional-integral-derivative (PID) controller) may be applied, and the disclosure is not aimed to be limited in this regard.

### Example Process

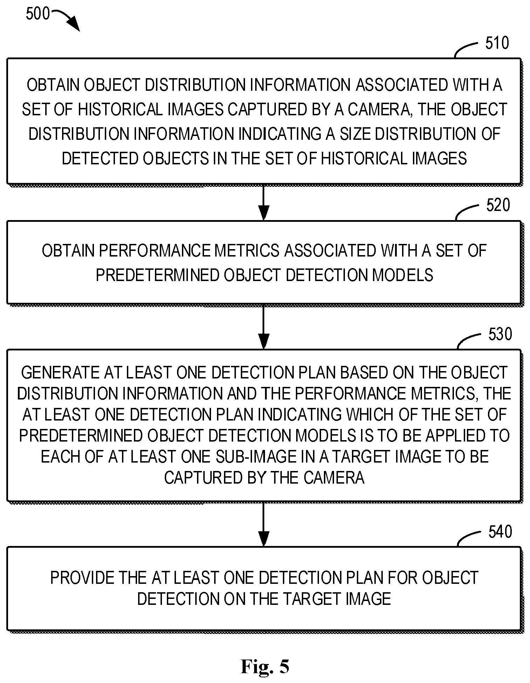

Fig. 5 illustrates a flowchart of a process 500 of generating a detection plan according to some implementations of the subject matter as described herein. The process 500 may be implemented by the generating device 140. The process 500 may also be implemented by any other devices or device clusters similar to the generating device 140. For purpose of description, the process 500 is described with reference to Fig. 1.

At block 510, the generating device 140 obtains object distribution information associated with a set of historical images captured by a camera, the object distribution information indicating a size distribution of detected objects in the set of historical images.

At block 520, the generating device 140 obtains performance metrics associated with a set of predetermined object detection models.

At block 530, the generating device 140 generates at least one detection plan based on the object distribution information and the performance metrics, the at least one detection plan indicating which of the set of predetermined object detection models is to be applied to each of at least one sub-image in a target image to be captured by the camera.

At block 540, the generating device 140 provides the at least one detection plan for object detection on the target image.

In some implementations, the object distribution information may comprise a set of distribution probabilities of the detected objects on a plurality of size levels.

In some implementations, a performance metric associated with an object detection model may comprise at least one of: a latency metric, indicating an estimated latency for processing a batch of images by the object detection model; or an accuracy metric, indicating an estimated accuracy for detecting objects on a particular size level by the object detection model.

In some implementations, generating at least one detection plan comprises: generating a plurality of partition modes based on input sizes of the set of predetermined object detection models, a partition mode indicating partitioning an image view of the camera into a set of regions; generating a plurality of candidate detection plans based on the plurality of partition plans by assigning an object detection model to each of the set of regions; and determining the at least one detection plan based on estimated performances of the plurality of candidate detection plans, the estimate performances being determined based on object distribution information associated with each of the set of regions and a performance metric associated with the assigned object detection model.

In some implementations, determining the at least one detection plan comprises: obtaining a desired latency for object detection on the target image; and selecting the at least one detection plan from the plurality of candidate detection plans based on a comparison of an estimated latency of a candidate detection plan and the desired latency.

In some implementations, a difference between the estimated latency of the at least one detection plan and the desired latency is less than a threshold difference.

In some implementations, the process 500 further comprises: updating the at least one detection plan comprising: for a first detection plan of the at least one detection plan indicating that the image view is partitioned into a plurality of regions, updating the first detection plan by adjusting sizes of the plurality of regions such that each pair of neighboring regions among the plurality of regions are partially overlapped.

In some implementations, updating the first candidate detection plan comprises: for a first region of the plurality of regions, extending a boundary of the first region by a distance, the distance being determined based on an estimated size of a potential object to be located at the boundary of the first region.

In some implementations, the process 500 further comprises: obtaining updated object distribution information associated with a new set of historical images captured by a camera; generating at least one updated detection plan based on the updated object distribution information; and providing the at least one updated detection plan for object detection on image to be captured by the camera.

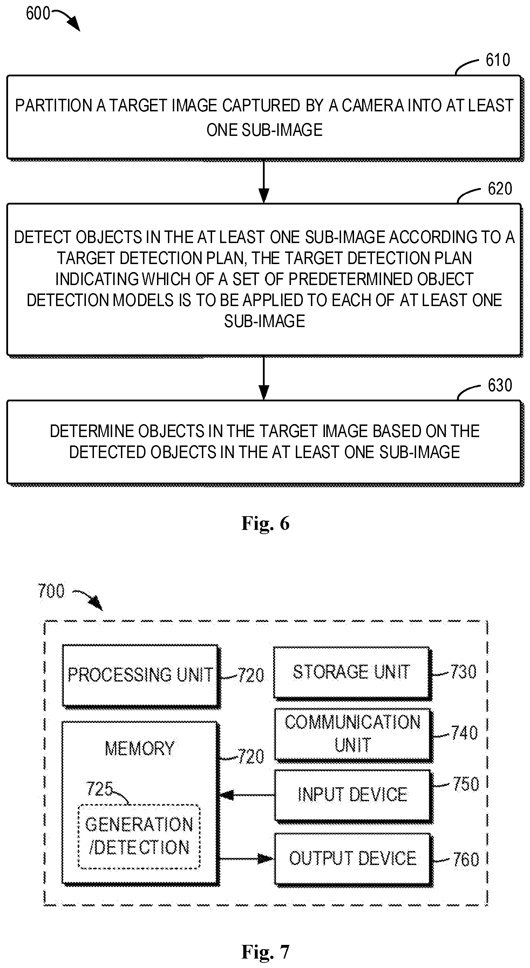

Fig. 6 illustrates a flowchart of a process 600 of object detection according to some implementations of the subject matter as described herein. The process 600 may be implemented by the detecting device 170. The process 600 may also be implemented by any other devices or device clusters similar to the detecting device 170. For purpose of description, the process 600 is described with reference to Fig. 1.

At block 610, the detecting device 170 partitions a target image captured by a camera into at least one sub-image.

At block 620, the detecting device 170 detects objects in the at least one sub-image according to a target detection plan, the target detection plan indicating which of a set of predetermined object detection models is to be applied to each of at least one sub-image.

At block 630, the detecting device 170 determines objects in the target image based on the detected objects in the at least one sub-image.

In some implementations, the target detection plan is generated based on object distribution information associated with a set of historical images captured by the camera and performance metrics associated with the set of predetermined object detection models.

In some implementations, partitioning a target image captured by a camera into at least one sub-image comprises: partitioning the target image into the at least one sub-image according to a partition plan indicated by the target detection plan.

In some implementations, the process 600 further comprises: obtaining a plurality of detection plans; and selecting the target plan from the plurality of detection plans based on a desired latency for object detection on the target image.

In some implementations, selecting the target plan from the plurality of detection plans based on a desired latency for object detection on the target image comprises: obtaining a historical latency for object detection on a historical image captured by the camera, the object detection on the historical image being performed according to a first detection plan of the plurality of detection plans; and selecting the target detection plan from the plurality of detection plans based on a difference between the historical latency and the desired latency.

In some implementations, selecting the target detection plan from the plurality of detection plans based on a difference between the historical latency and the desired latency comprises: in accordance with a determination that the historical latency is less than the desired latency and the difference is greater than a threshold, selecting the target detection plan from the plurality of detection plans, wherein an estimated latency of the target detection plan is greater than that of the first detection plan.

In some implementations, the at least one image comprises a plurality of sub-images, and wherein detecting objects in the at least one sub-image according to a target detection plan comprises: determining a first set of sub-images from the plurality of sub-images based on object detection results of a plurality of historical images obtained according to the target detection plan; and detecting objects in the plurality of sub-images by skipping object detection on the first set of sub-images.

In some implementations, a first set of sub-images comprise at least one of: a first sub-image corresponding to a first region, wherein no object is detected from sub-images corresponding to the first region of the plurality of historical images, or a second sub-image corresponding to a second region, wherein object detection on a sub-image corresponding to the second region of a previous historical image is skipped.

In some implementations, object detection on sub-images corresponding to the second region is skipped for a plurality of consecutive historical images and wherein a number of the plurality of consecutive historical images is less than a threshold number.

### Example Device

Fig. 7 illustrates a block diagram of a computing device 700 in which various implementations of the subject matter described herein can be implemented. It would be appreciated that the computing device 700 shown in Fig. 7 is merely for purpose of illustration, without suggesting any limitation to the functions and scopes of the implementations of the subject matter described herein in any manner. As shown in Fig. 7, the computing device 700 includes a general-purpose computing device 700. Components of the computing device 700 may include, but are not limited to, one or more processors or processing units 710, a memory 720, a storage device 730, one or more communication units 740, one or more input devices 750, and one or more output devices 760.

In some implementations, the computing device 700 may be implemented as any user terminal or server terminal having the computing capability. The server terminal may be a server, a large-scale computing device or the like that is provided by a service provider. The user terminal may for example be any type of mobile terminal, fixed terminal, or portable terminal, including a mobile phone, station, unit, device, multimedia computer, multimedia tablet, Internet node, communicator, desktop computer, laptop computer, notebook computer, netbook computer, tablet computer, personal communication system (PCS) device, personal navigation device, personal digital assistant (PDA), audio/video player, digital camera/video camera, positioning device, television receiver, radio broadcast receiver, E-book device, gaming device, or any combination thereof, including the accessories and peripherals of these devices, or any combination thereof. It would be contemplated that the computing device 700 can support any type of interface to a user (such as "wearable" circuitry and the like).

The processing unit 710 may be a physical or virtual processor and can implement various processes based on programs stored in the memory 720. In a multi-processor system, multiple processing units execute computer executable instructions in parallel so as to improve the parallel processing capability of the computing device 700. The processing unit 710 may also be referred to as a central processing unit (CPU), a microprocessor, a controller or a microcontroller.

The computing device 700 typically includes various computer storage medium. Such medium can be any medium accessible by the computing device 700, including, but not limited to, volatile and non-volatile medium, or detachable and non-detachable medium. The memory 720 can be a volatile memory (for example, a register, cache, Random Access Memory (RAM)), a non-volatile memory (such as a Read-Only Memory (ROM), Electrically Erasable Programmable Read-Only Memory (EEPROM), or a flash memory), or any combination thereof. The storage device 730 may be any detachable or non-detachable medium and may include a machine-readable medium such as a memory, flash memory drive, magnetic disk or another other media, which can be used for storing information and/or data and can be accessed in the computing device 700.

The computing device 700 may further include additional detachable/non-detachable, volatile/non-volatile memory medium. Although not shown in Fig. 7, it is possible to provide a magnetic disk drive for reading from and/or writing into a detachable and non-volatile magnetic disk and an optical disk drive for reading from and/or writing into a detachable non-volatile optical disk. In such cases, each drive may be connected to a bus (not shown) via one or more data medium interfaces.

The communication unit 740 communicates with a further computing device via the communication medium. In addition, the functions of the components in the computing device 700 can be implemented by a single computing cluster or multiple computing machines that can communicate via communication connections. Therefore, the computing device 700 can operate in a networked environment using a logical connection with one or more other servers, networked personal computers (PCs) or further general network nodes.

The input device 750 may be one or more of a variety of input devices, such as a mouse, keyboard, tracking ball, voice-input device, and the like. The output device 760 may be one or more of a variety of output devices, such as a display, loudspeaker, printer, and the like. By means of the communication unit 740, the computing device 700 can further communicate with one or more external devices (not shown) such as the storage devices and display device, with one or more devices enabling the user to interact with the computing device 700, or any devices (such as a network card, a modem and the like) enabling the computing device 700 to communicate with one or more other computing devices, if required. Such communication can be performed via input/output (I/O) interfaces (not shown).

In some implementations, as an alternative of being integrated in a single device, some or all components of the computing device 700 may also be arranged in cloud computing architecture. In the cloud computing architecture, the components may be provided remotely and work together to implement the functionalities described in the subject matter described herein. In some implementations, cloud computing provides computing, software, data access and storage service, which will not require end users to be aware of the physical locations or configurations of the systems or hardware providing these services. In various implementations, the cloud computing provides the services via a wide area network (such as Internet) using suitable protocols. For example, a cloud computing provider provides applications over the wide area network, which can be accessed through a web browser or any other computing components. The software or components of the cloud computing architecture and corresponding data may be stored on a server at a remote position. The computing resources in the cloud computing environment may be merged or distributed at locations in a remote data center. Cloud computing infrastructures may provide the services through a shared data center, though they behave as a single access point for the users. Therefore, the cloud computing architectures may be used to provide the components and functionalities described herein from a service provider at a remote location. Alternatively, they may be provided from a conventional server or installed directly or otherwise on a client device.

The computing device 700 may be used to implement detection plan generation and/or object detection in implementations of the subject matter described herein. The memory 720 may include one or more generation or detection modules 725 having one or more program instructions. These modules are accessible and executable by the processing unit 710 to perform the functionalities of the various implementations described herein.

### Example Implementations

Some example implementations of the subject matter described herein are listed below.

In a first aspect, the subject matter described herein provides a computer-implemented method. The method comprises: obtaining object distribution information associated with a set of historical images captured by a camera, the object distribution information indicating a size distribution of detected objects in the set of historical images; obtaining performance metrics associated with a set of predetermined object detection models; generating at least one detection plan based on the object distribution information and the performance metrics, the at least one detection plan indicating which of the set of predetermined object detection models is to be applied to each of at least one sub-image in a target image to be captured by the camera; and providing the at least one detection plan for object detection on the target image.

In some implementations, the object distribution information comprise a set of distribution probabilities of the detected objects on a plurality of size levels.

In some implementations, a performance metric associated with an object detection model comprises at least one of: a latency metric, indicating an estimated latency for processing a batch of images by the object detection model; or an accuracy metric, indicating an estimated accuracy for detecting objects on a particular size level by the object detection model.

In some implementations, generating at least one detection plan comprises: generating a plurality of partition modes based on input sizes of the set of predetermined object detection models, a partition mode indicating partitioning an image view of the camera into a set of regions; generating a plurality of candidate detection plans based on the plurality of partition modes by assigning an object detection model to each of the set of regions; and determining the at least one detection plan based on estimated performances of the plurality of candidate detection plans, the estimate performances being determined based on object distribution information associated with each of the set of regions and a performance metric associated with the assigned object detection model.

In some implementations, obtaining the at least one detection plan comprises: obtaining a desired latency for object detection on the target image; and selecting the at least one detection plan from the plurality of candidate detection plans based on a comparison of an estimated latency of a candidate detection plan and the desired latency.

In some implementations, a difference between the estimated latency of the at least one detection plan and the desired latency is less than a threshold difference.

In some implementations, the method further comprises: updating the at least one detection plan, comprising: for a first detection plan of the at least one detection plan indicating that the image view is to be partitioned into a plurality of regions, updating the first detection plan by adjusting sizes of the plurality of regions such that each pair of neighboring regions among the plurality of regions are partially overlapped.

In some implementations, updating the first candidate detection plan comprises: for a first region of the plurality of regions, extending a boundary of the first region by a distance, the distance being determined based on an estimated size of a potential object to be located at the boundary of the first region.

In some implementations, the method further comprises: obtaining updated object distribution information associated with a new set of historical images captured by a camera; generating at least one updated detection plan based on the updated object distribution information; and providing the at least one updated detection plan for object detection on image to be captured by the camera.

In a second aspect, the subject matter described herein provides a computer-implemented method. The method comprises: partitioning a target image captured by a camera into at least one sub-image; detecting objects in the at least one sub-image according to a target detection plan, the target detection plan indicating which of a set of predetermined object detection models is to be applied to each of at least one sub-image; and determining objects in the target image based on the detected objects in the at least one sub-image.

In some implementations, the target detection plan is generated based on object distribution information associated with a set of historical images captured by the camera and performance metrics associated with the set of predetermined object detection models.

In some implementations, partitioning a target image captured by a camera into at least one sub-image comprises: partitioning the target image into the at least one sub-image according to a partition plan indicated by the target detection plan.

In some implementations, the method further comprises: obtaining a plurality of detection plans; and selecting the target plan from the plurality of detection plans based on a desired latency for object detection on the target image.

In some implementations, selecting the target plan from the plurality of detection plans based on a desired latency for object detection on the target image comprises: obtaining a historical latency for object detection on a historical image captured by the camera, the object detection on the historical image being performed according to a first detection plan of the plurality of detection plans; and selecting the target detection plan from the plurality of detection plans based on a difference between the historical latency and the desired latency.

In some implementations, selecting the target detection plan from the plurality of detection plans based on a difference between the historical latency and the desired latency comprises: in accordance with a determination that the historical latency is less than the desired latency and the difference is greater than a threshold, selecting the target detection plan from the plurality of detection plans, wherein an estimated latency of the target detection plan is greater than that of the first detection plan.

In some implementations, the at least one image comprises a plurality of sub-images, and wherein detecting objects in the at least one sub-image according to a target detection plan comprises: obtaining a historical latency for object detection on a historical image captured by the camera, the object detection on the historical image being performed according to a first detection plan of the plurality of detection plans; and selecting the target detection plan from the plurality of detection plans based on a difference between the historical latency and the desired latency.

In some implementations, a first set of sub-images comprise at least one of: a first sub-image corresponding to a first region, wherein no object is detected from sub-images corresponding to the first region of the plurality of historical images, or a second sub-image corresponding to a second region, wherein object detection on a sub-image corresponding to the second region of a previous historical image is skipped.

In some implementations, object detection on sub-images corresponding to the second region is skipped for a plurality of consecutive historical images and a number of the plurality of consecutive historical images is less than a threshold number.

In a third aspect, the subject matter described herein provides an electronic device. The electronic device comprises a processing unit; and a memory coupled to the processing unit and having instructions stored thereon which, when executed by the processing unit, cause the electronic device to perform acts comprising: obtaining object distribution information associated with a set of historical images captured by a camera, the object distribution information indicating a size distribution of detected objects in the set of historical images; obtaining performance metrics associated with a set of predetermined object detection models; generating at least one detection plan based on the object distribution information and the performance metrics, the at least one detection plan indicating which of the set of predetermined object detection models is to be applied to each of at least one sub-image in a target image to be captured by the camera; and providing the at least one detection plan for object detection on the target image.

In some implementations, the object distribution information comprise a set of distribution probabilities of the detected objects on a plurality of size levels.

In some implementations, a performance metric associated with an object detection model comprises at least one of: a latency metric, indicating an estimated latency for processing a batch of images by the object detection model; or an accuracy metric, indicating an estimated accuracy for detecting objects on a particular size level by the object detection model.

In some implementations, generating at least one detection plan comprises: generating a plurality of partition modes based on input sizes of the set of predetermined object detection models, a partition mode indicating partitioning an image view of the camera into a set of regions; generating a plurality of candidate detection plans based on the plurality of partition modes by assigning an object detection model to each of the set of regions; and determining the at least one detection plan based on estimated performances of the plurality of candidate detection plans, the estimate performances being determined based on object distribution information associated with each of the set of regions and a performance metric associated with the assigned object detection model.

In some implementations, obtaining the at least one detection plan comprises: obtaining a desired latency for object detection on the target image; and selecting the at least one detection plan from the plurality of candidate detection plans based on a comparison of an estimated latency of a candidate detection plan and the desired latency.

In some implementations, a difference between the estimated latency of the at least one detection plan and the desired latency is less than a threshold difference.

In some implementations, the acts further comprise: updating the at least one detection plan, comprising: for a first detection plan of the at least one detection plan indicating that the image view is to be partitioned into a plurality of regions, updating the first detection plan by adjusting sizes of the plurality of regions such that each pair of neighboring regions among the plurality of regions are partially overlapped.

In some implementations, updating the first candidate detection plan comprises: for a first region of the plurality of regions, extending a boundary of the first region by a distance, the distance being determined based on an estimated size of a potential object to be located at the boundary of the first region.

In some implementations, the acts further comprise: obtaining updated object distribution information associated with a new set of historical images captured by a camera; generating at least one updated detection plan based on the updated object distribution information; and providing the at least one updated detection plan for object detection on image to be captured by the camera.

In a fourth aspect, the subject matter described herein provides an electronic device. The electronic device comprises a processing unit; and a memory coupled to the processing unit and having instructions stored thereon which, when executed by the processing unit, cause the electronic device to perform acts comprising: partitioning a target image captured by a camera into at least one sub-image; detecting objects in the at least one sub-image according to a target detection plan, the target detection plan indicating which of a set of predetermined object detection models is to be applied to each of at least one sub-image; and determining objects in the target image based on the detected objects in the at least one sub-image.

In some implementations, the target detection plan is generated based on object distribution information associated with a set of historical images captured by the camera and performance metrics associated with the set of predetermined object detection models.

In some implementations, partitioning a target image captured by a camera into at least one sub-image comprises: partitioning the target image into the at least one sub-image according to a partition plan indicated by the target detection plan.

In some implementations, the acts further comprise: obtaining a plurality of detection plans; and selecting the target plan from the plurality of detection plans based on a desired latency for object detection on the target image.

In some implementations, selecting the target plan from the plurality of detection plans based on a desired latency for object detection on the target image comprises: obtaining a historical latency for object detection on a historical image captured by the camera, the object detection on the historical image being performed according to a first detection plan of the plurality of detection plans; and selecting the target detection plan from the plurality of detection plans based on a difference between the historical latency and the desired latency.

In some implementations, selecting the target detection plan from the plurality of detection plans based on a difference between the historical latency and the desired latency comprises: in accordance with a determination that the historical latency is less than the desired latency and the difference is greater than a threshold, selecting the target detection plan from the plurality of detection plans, wherein an estimated latency of the target detection plan is greater than that of the first detection plan.

In some implementations, the at least one image comprises a plurality of sub-images, and wherein detecting objects in the at least one sub-image according to a target detection plan comprises: obtaining a historical latency for object detection on a historical image captured by the camera, the object detection on the historical image being performed according to a first detection plan of the plurality of detection plans; and selecting the target detection plan from the plurality of detection plans based on a difference between the historical latency and the desired latency.

In some implementations, a first set of sub-images comprise at least one of: a first sub-image corresponding to a first region, wherein no object is detected from sub-images corresponding to the first region of the plurality of historical images, or a second sub-image corresponding to a second region, wherein object detection on a sub-image corresponding to the second region of a previous historical image is skipped.

In some implementations, object detection on sub-images corresponding to the second region is skipped for a plurality of consecutive historical images and a number of the plurality of consecutive historical images is less than a threshold number.

In a fifth aspect, the subject matter described herein provides a computer program product tangibly stored on a computer storage medium and comprising machine-executable instructions which, when executed by a device, cause the device to perform the method according to the aspect in the first and/or second aspect. The computer storage medium may be a non-transitory computer storage medium.

In a sixth aspect, the subject matter described herein provides a non-transitory computer storage medium having machine-executable instructions stored thereon, the machine-executable instruction, when executed by a device, causing the device to perform the method according to the aspect in the first and/or second aspect.

The functionalities described herein can be performed, at least in part, by one or more hardware logic components. For example, and without limitation, illustrative types of hardware logic components that can be used include Field-Programmable Gate Arrays (FPGAs), Application-specific Integrated Circuits (ASICs), Application-specific Standard Products (ASSPs), System-on-a-chip systems (SOCs), Complex Programmable Logic Devices (CPLDs), and the like.

Program code for carrying out the methods of the subject matter described herein may be written in any combination of one or more programming languages. The program code may be provided to a processor or controller of a general-purpose computer, special purpose computer, or other programmable data processing apparatus such that the program code, when executed by the processor or controller, causes the functions/operations specified in the flowcharts and/or block diagrams to be implemented. The program code may be executed entirely or partly on a machine, executed as a stand-alone software package partly on the machine, partly on a remote machine, or entirely on the remote machine or server.

In the context of this disclosure, a machine-readable medium may be any tangible medium that may contain or store a program for use by or in connection with an instruction execution system, apparatus, or device. The machine-readable medium may be a machine-readable signal medium or a machine-readable storage medium. A machine-readable medium may include but not limited to an electronic, magnetic, optical, electromagnetic, infrared, or semiconductor system, apparatus, or device, or any suitable combination of the foregoing. More specific examples of the machine-readable storage medium would include an electrical connection having one or more wires, a portable computer diskette, a hard disk, a random-access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, while operations are depicted in a particular order, this should not be understood as requiring that such operations are performed in the particular order shown or in sequential order, or that all illustrated operations are performed to achieve the desired results. In certain circumstances, multitasking and parallel processing may be advantageous. Likewise, while several specific implementation details are contained in the above discussions, these should not be construed as limitations on the scope of the subject matter described herein, but rather as descriptions of features that may be specific to particular implementations. Certain features that are described in the context of separate implementations may also be implemented in combination in a single implementation. Rather, various features described in a single implementation may also be implemented in multiple implementations separately or in any suitable sub-combination.

Although the subject matter has been described in language specific to structural features and/or methodological acts, it is to be understood that the subject matter specified in the appended claims is not necessarily limited to the specific features or acts described above. Rather, the specific features and acts described above are disclosed as example forms of implementing the claims.

## Claims

1. A computer-implemented method (500) for adaptive object detection, comprising:
obtaining (510) object distribution information associated with a set of historical images captured by a camera, the object distribution information indicating a distribution of size levels of detected objects in the set of historical images;
obtaining (520) performance metrics associated with a set of predetermined object detection models, wherein each performance metric associated with an object detection model comprises at least one of: a latency metric indicating an estimated latency for processing a batch of images by the object detection model, or an accuracy metric indicating an estimated accuracy for detecting objects on a particular size level by the object detection model;
generating (530) at least one detection plan based on the object distribution information and the performance metrics, the at least one detection plan indicating which of the set of predetermined object detection models is to be applied to each of at least one sub-image in a target image to be captured by the camera, wherein generating at least one detection plan comprises:
generating a plurality of partition modes based on input sizes of the set of predetermined object detection models, a partition mode indicating partitioning an image view of the camera into a set of regions;
generating a plurality of candidate detection plans based on the plurality of partition modes by assigning an object detection model to each of the set of regions; and
determining the at least one detection plan based on estimated performances of the plurality of candidate detection plans, the estimate performances being determined based on object distribution information associated with each of the set of regions and a performance metric associated with the assigned object detection model;
providing (540) the at least one detection plan for object detection on the target image;
partitioning a target image captured by the camera into at least one sub-image according to the partition mode of the at least one detection plan; and
determining objects in the target image, comprising detecting the objects in the at least one sub-image according to the at least one detection plan.

2. The method (500) of Claim 1, wherein determining the at least one detection plan comprises:
obtaining a desired latency for object detection on the target image; and
selecting the at least one detection plan from the plurality of candidate detection plans based on a comparison of an estimated latency of a candidate detection plan and the desired latency.

3. The method (500) of Claim 1, further comprising:
updating the at least one detection plan, comprising:
for a first detection plan of the at least one detection plan indicating that the image view is to be partitioned into a plurality of regions, updating the first detection plan by adjusting sizes of the plurality of regions such that each pair of neighboring regions among the plurality of regions are partially overlapped.

4. The method (500) of Claim 1, wherein updating the first candidate detection plan comprises:
for a first region of the plurality of regions, extending a boundary of the first region by a distance, the distance being determined based on an estimated size of a potential object to be located at the boundary of the first region.

5. The method (500) of Claim 1, further comprising:
obtaining updated object distribution information associated with a new set of historical images captured by a camera;
generating at least one updated detection plan based on the updated object distribution information; and
providing the at least one updated detection plan for object detection on image to be captured by the camera.

6. The method of Claim 1, further comprising:
selecting a target plan from the at least one detection plan based on a desired latency for object detection on the target image, wherein the desired latency indicates an upper limit of the processing time used for object detection.

7. The method of Claim 6, wherein selecting the target plan from the at least one detection plan based on a desired latency for object detection on the target image comprises:
obtaining a historical latency for object detection on a historical image captured by the camera, the object detection on the historical image being performed according to a detection plan of the at least one detection plan; and
selecting the target detection plan from the at least one detection plan based on a difference between the historical latency and the desired latency.

8. The method of Claim 1, wherein the at least one image comprises a plurality of sub-images, and wherein detecting the objects in the at least one sub-image according to the at least one detection plan comprises:
determining a first set of sub-images from the at least one sub-image based on object detection results of a plurality of historical images obtained according to the at least one detection plan; and
skipping object detection on the first set of sub-images.

9. The method of Claim 8, wherein a first set of sub-images comprise at least one of:
a first sub-image corresponding to a first region, wherein no object is detected from sub-images corresponding to the first region of the plurality of historical images, or
a second sub-image corresponding to a second region, wherein object detection on a sub-image corresponding to the second region of a previous historical image is skipped.

10. The method of Claim 9, wherein object detection on sub-images corresponding to the second region is skipped for a plurality of consecutive historical images, and wherein a number of the plurality of consecutive historical images is less than a threshold number.

11. An electronic device (700), comprising:
a processing unit (710); and
a memory (720) coupled to the processing unit (710) and having instructions stored thereon which, when executed by the processing unit (710), cause the electronic device (700) to perform the method according to any of Claims 1-10.

## Patentansprüche

1. Computerimplementiertes Verfahren (500) zur adaptiven Objekterkennung, umfassend:
Erlangen (510) von Objektverteilungsinformationen in Verbindung mit einer Reihe historischer Bilder, die von einer Kamera aufgenommen wurden, wobei die Objektverteilungsinformationen eine Verteilung von Größenstufen erkannter Objekte in der Reihe historischer Bilder angeben;
Erlangen (520) von Leistungskennzahlen in Verbindung mit einer Reihe von vorbestimmten Objekterkennungsmodellen, wobei jede Leistungskennzahl in Verbindung mit einem Objekterkennungsmodell mindestens eines der Folgenden umfasst: eine Latenzkennzahl, die eine geschätzte Latenz zum Verarbeiten eines Bildstapels durch das Objekterkennungsmodell angibt, oder eine Genauigkeitskennzahl, die eine geschätzte Genauigkeit zum Erkennen von Objekten einer bestimmten Größenstufe durch das Objekterkennungsmodell angibt;
Erzeugen (530) von mindestens einem Erkennungsplan basierend auf den Objektverteilungsinformationen und den Leistungskennzahlen, wobei der mindestens eine Erkennungsplan angibt, welches der Reihe von vorbestimmten Objekterkennungsmodellen auf jedes des mindestens einen Unterbildes in einem Zielbild, das von der Kamera aufzunehmen ist, anzuwenden ist, wobei das Erzeugen von mindestens einem Erkennungsplan Folgendes umfasst:
Erzeugen einer Vielzahl von Partitionierungsmodi basierend auf Eingabegrößen der Reihe vorbestimmter Objekterkennungsmodelle, wobei ein Partitionierungsmodus die Partitionierung einer Bildansicht der Kamera in eine Reihe von Bereichen angibt;
Erzeugen einer Vielzahl von Kandidatenerkennungsplänen basierend auf der Vielzahl von Partitionierungsmodi durch Zuweisen eines Objekterkennungsmodells zu jedem der Reihe von Bereichen; und
Bestimmen des mindestens einen Erkennungsplans basierend auf geschätzten Leitungen der Vielzahl von Kandidatenerkennungsplänen, wobei die geschätzten Leistungen basierend auf Objektverteilungsinformationen in Verbindung mit jedem der Reihe von Bereichen und einer Leistungskennzahl in Verbindung mit dem zugewiesenen Objekterkennungsmodell bestimmt werden;
Bereitstellen (540) des mindestens einen Erkennungsplans zur Objekterkennung auf dem Zielbild;
Partitionieren eines Zielbildes, das von der Kamera aufgenommen wurde, in mindestens ein Unterbild gemäß dem Partitionierungsmodus des mindestens einen Erkennungsplans; und
Bestimmen von Objekten auf dem Zielbild, umfassend Erkennen der Objekte in dem mindestens einen Unterbild gemäß dem mindestens einen Erkennungsplan.

2. Verfahren (500) nach Anspruch 1, wobei das Bestimmen des mindestens einen Erkennungsplans Folgendes umfasst:
Erlangen einer gewünschten Latenz zur Objekterkennung auf dem Zielbild; und
Auswählen des mindestens einen Erkennungsplans aus der Vielzahl von Kandidatenerkennungsplänen basierend auf einem Vergleich einer geschätzten Latenz eines Kandidatenerkennungsplans und der gewünschten Latenz.

3. Verfahren (500) nach Anspruch 1, ferner umfassend:
Aktualisieren des mindestens einen Erkennungsplans, umfassend:
für einen ersten Erkennungsplan des mindestens einen Erkennungsplans, der angibt, dass die Bildansicht in eine Vielzahl von Bereichen zu partitionieren ist, Aktualisieren des ersten Erkennungsplans durch Anpassen von Größen der Vielzahl von Bereichen derart, dass sich jedes Paar benachbarter Bereiche unter der Vielzahl von Bereichen teilweise überlappt.

4. Verfahren (500) nach Anspruch 1, wobei das Aktualisieren des ersten Kandidatenerkennungsplans Folgendes umfasst:
für einen ersten Bereich der Vielzahl von Bereichen, Erweitern einer Grenze des ersten Bereichs um eine Distanz, wobei die Distanz basierend auf einer geschätzten Größe eines potentiellen Objekts, das an der Grenze des ersten Bereichs zu lokalisieren ist, bestimmt wird.

5. Verfahren (500) nach Anspruch 1, ferner umfassend:
Erlangen aktualisierter Objektverteilungsinformationen in Verbindung mit einer neuen Reihe historischer Bilder, die von einer Kamera aufgenommen wurden;
Erzeugen von mindestens einem aktualisierten Erkennungsplan basierend auf den aktualisierten Objektverteilungsinformationen; und
Bereitstellen des mindestens einen aktualisierten Erkennungsplans zur Objekterkennung auf einem Bild, das von der Kamera aufzunehmen ist.

6. Verfahren nach Anspruch 1, ferner umfassend:
Auswählen eines Zielplans aus dem mindestens einen Erkennungsplan basierend auf einer gewünschten Latenz zur Objekterkennung auf dem Zielbild, wobei die gewünschte Latenz eine Obergrenze der für die Objekterkennung verwendeten Verarbeitungszeit angibt.

7. Verfahren nach Anspruch 6, wobei das Auswählen des Zielplans aus dem mindestens einen Erkennungsplan basierend auf einer gewünschten Latenz zur Objekterkennung auf dem Zielbild Folgendes umfasst:
Erlangen einer historischen Latenz zur Objekterkennung auf einem historischen Bild, das von der Kamera aufgenommen wurde, wobei die Objekterkennung auf dem historischen Bild gemäß einem Erkennungsplan des mindestens einen Erkennungsplans durchgeführt wird; und
Auswählen des Zielerkennungsplans aus dem mindestens einen Erkennungsplan basierend auf einer Differenz zwischen der historischen Latenz und der gewünschten Latenz.

8. Verfahren nach Anspruch 1, wobei das mindestens eine Bild eine Vielzahl von Unterbildern umfasst und wobei das Erkennen der Objekte auf dem mindestens einen Unterbild gemäß dem mindestens einen Erkennungsplan Folgendes umfasst:
Bestimmen einer ersten Reihe von Unterbildern aus dem mindestens einen Unterbild basierend auf Objekterkennungsergebnissen einer Vielzahl historischer Bilder, die gemäß dem mindestens einen Erkennungsplan erlangt wurden; und
Überspringen der Objekterkennung bei der ersten Reihe von Unterbildern.

9. Verfahren nach Anspruch 8, wobei eine erste Reihe von Unterbildern mindestens eines der Folgenden umfasst:
ein erstes Unterbild, das einem ersten Bereich entspricht, wobei auf Unterbildern, die dem ersten Bereich der Vielzahl historischer Bilder entsprechen, kein Objekt erkannt wird, oder
ein zweites Unterbild, das einem zweiten Bereich entspricht, wobei die Objekterkennung auf einem Unterbild, das dem zweiten Bereich eines früheren historischen Bildes entspricht, übersprungen wird.

10. Verfahren nach Anspruch 9, wobei die Objekterkennung auf Unterbildern, die dem zweiten Bereich entsprechen, für eine Vielzahl aufeinanderfolgender historischer Bilder übersprungen wird und wobei eine Anzahl der Vielzahl aufeinanderfolgender historischer Bilder geringer ist als eine Schwellenwertanzahl.

11. Elektronische Vorrichtung (700), umfassend:
eine Verarbeitungseinheit (710); und
einen Speicher (720), der an die Verarbeitungseinheit (710) gekoppelt ist und darauf gespeicherte Anweisungen aufweist, die bei Ausführung durch die Verarbeitungseinheit (710) die elektronische Vorrichtung (700) dazu veranlassen, das Verfahren nach einem der Ansprüche 1-10 durchzuführen.

## Revendications

1. Procédé mis en œuvre par ordinateur (500) de détection d'objet adaptative, comprenant :
l'obtention (510) d'informations de distribution d'objets associées à un ensemble d'images historiques capturées par une caméra, les informations de distribution d'objets indiquant une distribution de niveaux de taille d'objets détectés dans l'ensemble d'images historiques ;
l'obtention (520) de métriques de performance associées à un ensemble de modèles de détection d'objets prédéterminés, dans lequel chaque métrique de performance associée à un modèle de détection d'objets comprend au moins l'un : d'une métrique de latence indiquant une latence estimée pour le traitement d'un lot d'images par le modèle de détection d'objets, ou d'une métrique de précision indiquant une précision estimée pour la détection d'objets à un niveau de taille particulier par le modèle de détection d'objets ;
la génération (530) d'au moins un plan de détection sur la base des informations de distribution d'objets et des métriques de performance, l'au moins un plan de détection indiquant lequel de l'ensemble de modèles de détection d'objets prédéterminés doit être appliqué à chacune d'au moins une sous-image dans une image cible devant être capturée par la caméra, dans lequel la génération d'au moins un plan de détection comprend :
la génération d'une pluralité de modes de partitionnement sur la base de tailles d'entrée de l'ensemble de modèles de détection d'objets prédéterminés, un mode de partitionnement indiquant le partitionnement d'une vue d'image de la caméra en un ensemble de régions ;
la génération d'une pluralité de plans de détection candidats sur la base de la pluralité de modes de partitionnement, en affectant un modèle de détection d'objets à chacune de l'ensemble de régions ; et
la détermination de l'au moins un plan de détection sur la base de performances estimées de la pluralité de plans de détection candidats, les performances estimées étant déterminées sur la base d'informations de distribution d'objets associées à chacune de l'ensemble de régions et d'une métrique de performance associée au modèle de détection d'objets attribué ;
la fourniture (540) de l'au moins un plan de détection pour la détection d'objets sur l'image cible ;
le partitionnement d'une image cible capturée par la caméra en au moins une sous-image selon le mode de partitionnement de l'au moins un plan de détection ; et
la détermination d'objets dans l'image cible, comprenant la détection des objets dans l'au moins une sous-image selon l'au moins un plan de détection.

2. Procédé (500) selon la revendication 1, dans lequel la détermination de l'au moins un plan de détection comprend :
l'obtention d'une latence souhaitée pour la détection d'objets sur l'image cible ; et
la sélection de l'au moins un plan de détection parmi la pluralité de plans de détection candidats sur la base d'une comparaison entre une latence estimée d'un plan de détection candidat et la latence souhaitée.

3. Procédé (500) selon la revendication 1, comprenant en outre :
la mise à jour de l'au moins un plan de détection, comprenant :
pour un premier plan de détection de l'au moins un plan de détection, indiquant que la vue d'image doit être partitionnée en une pluralité de régions, la mise à jour du premier plan de détection en ajustant les tailles de la pluralité de régions de telle sorte que chaque paire de régions voisines parmi la pluralité de régions se chevauche partiellement.

4. Procédé (500) selon la revendication 1, dans lequel la mise à jour du premier plan de détection candidat comprend :
pour une première région de la pluralité de régions, l'extension d'une limite de la première région à raison d'une distance, la distance étant déterminée sur la base d'une taille estimée d'un objet potentiel devant être situé à la limite de la première région.

5. Procédé (500) selon la revendication 1, comprenant en outre :
l'obtention d'informations de distribution d'objets mises à jour, associées à un nouvel ensemble d'images historiques capturées par une caméra ;
la génération d'au moins un plan de détection mis à jour sur la base des informations de distribution d'objets mises à jour ; et
la fourniture de l'au moins un plan de détection mis à jour pour la détection d'objets sur une image devant être capturée par la caméra.

6. Procédé selon la revendication 1, comprenant en outre :
la sélection d'un plan cible à partir de l'au moins un plan de détection sur la base d'une latence souhaitée pour la détection d'objets sur l'image cible, dans lequel la latence souhaitée indique une limite supérieure du temps de traitement utilisé pour la détection d'objets.

7. Procédé selon la revendication 6, dans lequel la sélection du plan cible parmi l'au moins un plan de détection sur la base d'une latence souhaitée pour la détection d'objets sur l'image cible comprend :
l'obtention d'une latence historique pour la détection d'objets sur une image historique capturée par la caméra, la détection d'objets sur l'image historique étant réalisée selon un plan de détection de l'au moins un plan de détection ; et
la sélection du plan de détection cible à partir de l'au moins un plan de détection sur la base d'une différence entre la latence historique et la latence souhaitée.

8. Procédé selon la revendication 1, dans lequel l'au moins une image comprend une pluralité de sous-images, et dans lequel la détection des objets dans l'au moins une sous-image selon l'au moins un plan de détection comprend :
la détermination d'un premier ensemble de sous-images à partir de l'au moins une sous-image, sur la base des résultats de détection d'objets d'une pluralité d'images historiques obtenues selon l'au moins un plan de détection ; et
le saut de la détection d'objets sur le premier ensemble de sous-images.

9. Procédé selon la revendication 8, dans lequel un premier ensemble de sous-images comprend au moins l'une :
d'une première sous-image correspondant à une première région, dans lequel aucun objet n'est détecté à partir des sous-images correspondant à la première région de la pluralité d'images historiques, ou
d'une seconde sous-image correspondant à une seconde région, dans lequel la détection d'objets sur une sous-image correspondant à la seconde région d'une image historique précédente est omise.

10. Procédé selon la revendication 9, dans lequel la détection d'objets sur des sous-images correspondant à la seconde région est omise pour une pluralité d'images historiques consécutives, et dans lequel le nombre d'images de la pluralité d'images historiques consécutives est inférieur à un nombre seuil.

11. Dispositif électronique (700), comprenant :
une unité de traitement (710) ; et
une mémoire (720) couplée à l'unité de traitement (710) et dans laquelle sont stockées des instructions qui, lorsqu'elles sont exécutées par l'unité de traitement (710), amènent le dispositif électronique (700) à réaliser le procédé selon l'une quelconque des revendications 1 à 10.
